# EUROPEAN PATENT SPECIFICATION

(11) **EP 0 417 183 B1**
(45) Date of publication and mention of the grant of the patent: **24.05.1995**
(21) Application number: 89906850.6
(22) Date of filing: 31.05.1989
(51) Int. Cl.: B01D 35/02

(54) **FILTER ARRANGEMENT FOR THE SEPARATION OF BODIES FROM A LIQUID**
FILTERANORDNUNG ZUM ABTRENNEN VON TEILCHEN AUS FLÜSSIGKEITEN
ARRANGEMENT DE FILTRATION SERVANT A SEPARER DES CORPS D'UN LIQUIDE

(30) Priority: 01.06.1988 SE 8802034
(43) Date of publication of application: 20.03.1991
(73) Proprietor: HOLMBERG, Glenn, S-282 00 Tyringe (SE)
(72) Inventor: HOLMBERG, Glenn, S-282 00 Tyringe (SE)
(74) Representative: Magnusson, Gustav
(86) International application number: SE8900303
(87) International publication number: WO8911903

(56) References cited:
- US-A- 1 812 736

## Description

The present invention relates to a filter arrangement for the separation of solid bodies, semisolid bodies and/or viscous substances from a liquid in accordance with the preamble of claim 1.

The separation of solid bodies, semisolid bodies and/or viscous substances such as oils from liquids is necessary and difficult in many connections. Particularly awkward conditions prevail when the size and/or consistency of the contaminations vary within wide limits. Also when particles of a small size, e g dimensions of less than 100 »m are included in, or constitute, the contaminations the problems of achieving an effective filtration are great, for example the maintaining of a high capacity of the filters. According to the technique used hitherto filters comprising finemeshed filter elements or edge filters are used, the mesh sizes or apertures being adapted to the sizes of the contaminants present. It is well known to those versed in the art that such filters have to be frequently cleaned and exchanged, since the filter openings easily become clogged up especially when the contaminated liquid includes bodies in a semisolid state which are easily deformed and stick firmly to the filter medium. Such bodies as a rule occur in all types of waste liquors and may be constituted of organic substances which are in an advanced state of putrefaction and largely shapeless. Also substances such as oils bring about problems of the type referred to here.

In accordance with the technique applied up to now a combination of backwashing and brushing or scraping of the filter surface is used for the cleaning of a filter. Backwashing implies substantial losses, since pure or already purified liquid has to be used for the purpose, as a result of which the amount of purified liquid and hence the capacity of the filter are reduced to a considerable extent. As a consequence thereof the cost of the purification process is increased. Moreover, under certain circumstances, heat has to be supplied in order to make the purification sufficiently effective. Thus, for example, in the case of strongly adhering substances, heated liquid often is used. This naturally gives rise to undesirable additional costs for the heating of the liquid. Finally, on separating, for example, oils it is particularly difficult to clean a filter, especially if the mesh size is small. In certain applications it is not possible to clean the filters, but they have to be exchanged when owing to clogging up the flow area of the filter has been reduced to a predetermined value.

US-A-1 812 736 discloses a filter arrangement for separating solid bodies from a liquid using a flexible belt, which belt comprises a layer of filter material and forms a delimited space which is enclosed by the belt. The belt passes via idler rollers and pressure rollers which keep the belt stretched and ensure that the delimited space is maintained. The pressure rollers have a position above the liquid surface and compress the passing filter material for the purpose of removing substances retained in said material. The solid matter falls off the belt by gravity before the belt reaches the pressure rollers.

The present invention relates to a filter arrangement where the need for backwashing of the filter is eliminated and where the filter only exceptionally has to be exchanged owing to its becoming clogged up. As a result a particularly high efficiency of the filter is obtained. Likewise in accordance with the invention the need for brushing or scraping of the filter element is eliminated, which means that the filter does not have to be taken out of operation in connection with its cleaning. The invention also makes possible a simple adaptation of the size of the filter openings and the capacity of the filter to existing needs.

The effects aimed at are obtained in accordance with a filter arrangement in accordance with the characterizing part of the independent claim.

By including in the filter element a resilient porous filter material provided with numerous passages (pores) through which the liquid passes, the bodies and/or substances which accompany the liquid are accumulated in the filter material. The passages as a rule are of very small dimensions, frequently less than 100 »m. On compressing the filter material bodies and/or substances retained in the filter material are removed by squeezing the liquid which is present in the filter material out of the cavities of the material and thereby takes along with it any bodies and/or substances separated by the filter material. A backwashing of the filter material is not required, and further the amount of liquid which is squeezed out of the filter material on its compression is extraordinarily small in relation to the quantity of liquid which passes through the filter element. Practical tests have shown that the quantity of squeezed out liquid as a rule largely corresponds to the liquid volume which is required for the transport, without any problem, of the bodies and/or substances removed through a duct to a collecting tank.

The filter element forms a disc which comprises the filter material. The disc has a mainly circular outer edge boundary, and is arranged so that it can rotate about a centre axis. The edge boundary connects mainly sealingly to an inner boundary of the canal.

Further appropiate embodiments of the invention are described in the dependent claims.

The invention will be described below in more detail in connection with a number of figures, wherein:
- Fig 1: is a schematic perspective view of a first embodiment of a filter arrangement in accordance with the invention,
- Fig 2: is a cross-sectional view of the canal with the filter element seen from a position upstream of it,
- Fig 3: shows section III-III in Fig 2, and
- Fig 4: shows the central region of the section III-III in Fig 2.

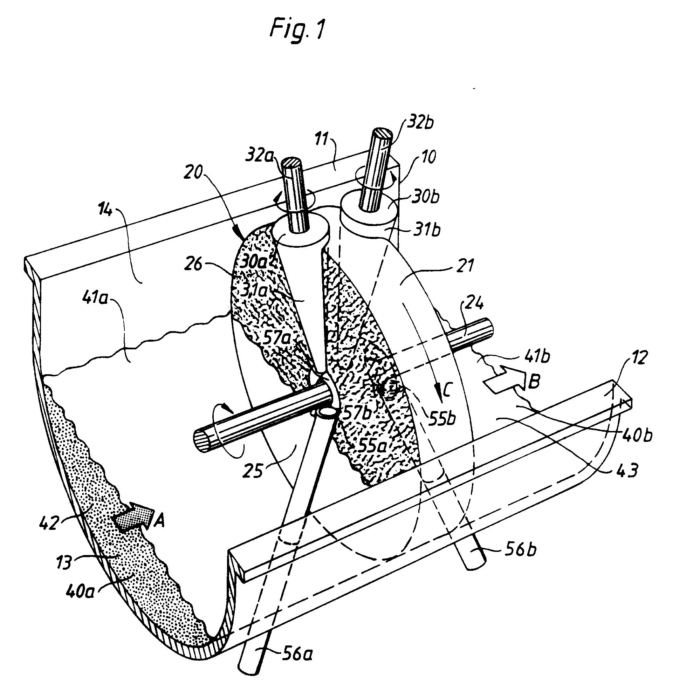

In Fig 1 there is shown an embodiment of a filter element 20 arranged in a canal 10, whose bottom part has a substantially circular cross-section. To facilitate the understanding of the figure the walls of the canal are shown in an embodiment wherein they are transparent. It is obvious though that as a rule the boundary of the canal will be made of non-transparent material, e g sheet-metal. The canal has on each side an upper boundary edge 11 and 12 respectively, each passing over into the inner boundary surface 14 of the canal. The central bottom region of the canal has the reference numeral 13.

The filter element 20 has a substantially circular outer edge boundary 21 of a shape adapted to the shape of the inner boundary 14 of the canal. The edge boundary of the filter element connects mainly sealingly to the inner boundary of the canal. The filter element comprises an elastic, resilient porous filter material 26 provided with passages (pores), the material being of such a composition and structure that it is permeable to the actual liquid (40a, 40b) whereas solid and/or semisolid bodies together with semiliquid or liquid substances 42 of a viscosity higher than the liquid, e g contaminations such as oil which accompany the liquid, stick to, and/or penetrate into the filter material. The filter element is journal led by means of a centre axis so that it can rotate about its centre. The part of the filter element which is passed by the liquid 40, i e mainly that part of the filter element which is below the liquid surface 41a upstream of the filter element, has the reference numeral 25.

In the embodiment shown two pressure means in the form of pressure rollers 30a, 30b are provided on opposite sides of the filter element and go substantially along the total radial extension of the filter material. The outer boundary surfaces 31a, 31b of the pressure rollers in the embodiment shown in the figure form truncated cones with their smallest circumference closest to the centre of the filter element. The circumference of the cones in each part of the respective cone is adapted to the distance from the centre of the filter element, so as to adapt the speed of each part of the boundary surface of the cone to the speed of the filter material when the filter element rotates about its centre. The arrow C indicates a preferred direction of rotation of the filter element. The pressure rollers each have an orientation causing the longitudinal axes 32a, 32b of the respective pressure rollers to be directed towards the region of the centre axis 24. Furthermore the orientation of the longitudinal axes just mentioned is chosen so that the pressure rollers between themselves form a gap of substantially constant gap width.

In certain applications the filter material has a thickness increasing or diminishing in the radial direction of the filter element. The gap width then will be varied in accordance with the thickness of the material, so that as a rule a substantially consistent compression of the filter material as it passes between the rollers is obtained.

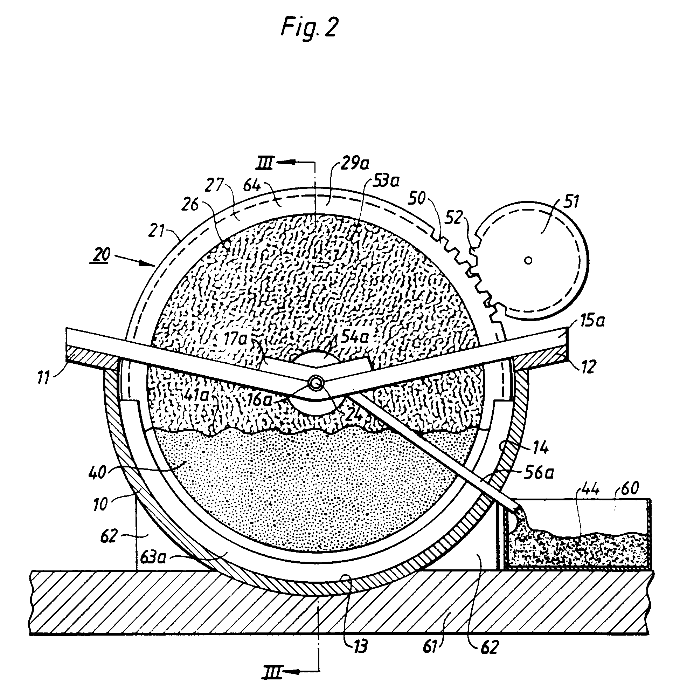

Adjoining the centre region of the filter element in the embodiment shown in Fig 1 collecting means 55a, 55b are provided which via connections 56a, 56b connect to a collecting tank 60 (see Fig 2). The collecting means are situated below the pressure rollers 30a, 30b. Circumferentially extending draining and conducting means 57a, 57b are provided in the embodiment shown to receive squeezed out bodies and/or substances as well as liquids and are situated in regions between the lower part of the respective pressure roller and the collecting means 55a, 55b. In certain applications the draining and conducting means are missing, the collecting means being provided as a rule directly below the pressure rollers.

In Fig 1 is also indicated how the liquid 40a, 40b passes through the canal in the direction of the arrows A and B. The liquid which is located upstream of the filter element is constituted of contaminated liquid 40a whilst the liquid which is located downstream of the filter element is constituted of purified liquid 40b. The reference numerals 41a and 41b refer to the liquid surface of the liquid upstream and downstream respectively of the filter element, and reference numeral 43 refers to the liquid flow through the canal and thus also the liquid flow through the filter element 20. The level difference between the liquid surface 41a upstream of the filter element and the liquid surface 41b downstream of the filter element causes a pressure difference between the outer boundary surfaces of the filter material. The pressure difference means that liquid is pressed through the filter material and the liquid flow 43 persists as long as the filter element allows liquid to pass through.

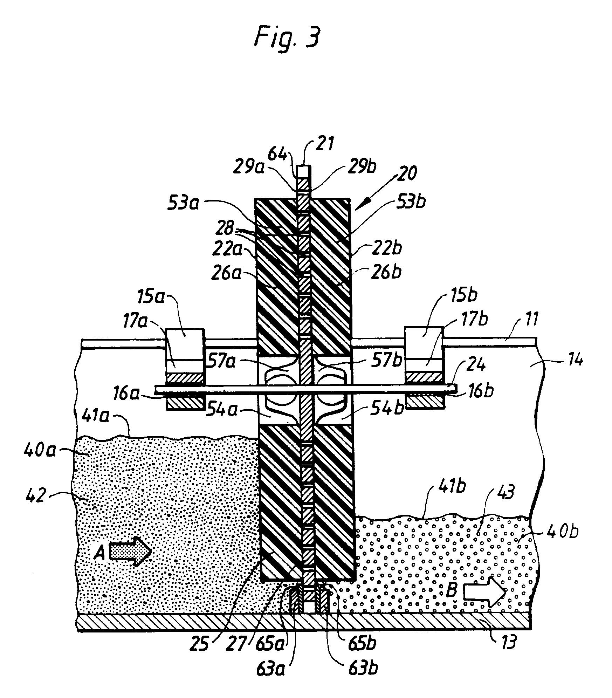

In Fig 2-4 is shown an embodiment of the invention where the filter element 20 comprises a substantially mechanically stable plate 27 which on either side is surrounded by a disc 53a, 53b of the filter material. Each one of the two discs has a central throughhole 54a, 54b. The opposite outer boundary surfaces of the filter element have the reference numerals 22a and 22b respectively and are formed in the embodiment shown by the boundary surfaces of the discs of filter material facing away from the plate 27.

The plate 27 is provided with numerous passages 28 for allowing the liquid to pass through the plate. The number of passages and their size are adapted to the filter material used and the magnitude of the liquid flow. The passages are distributed within the region covered by the discs 53a, 53b. In certain embodiments the discs of filter material are glued to opposing sides 29a, 29b of the plate whereas in other embodiments they are, for example, attached by means of mechanical elements. This latter embodiment is chosen primarily for applications where the ready exchange of discs appears desirable, for example, to be able to adapt the filter material and the thickness of the discs to the type and extent of contaminations in the liquid which on the particular occasion has to be purified. In the figures the plate is shown in an embodiment where its outer edge boundary 21 is provided with teeth 50 enabling it to cooperate with teeth 52 on a driving means 51. Sealing strips 63a, 63b are provided along the inner boundary 14 of the canal and in the embodiment shown they are arranged so that the plate in an edge region 64 which projects beyond the discs 53a, 53b of filter material is surrounded by the sealing strips when the edge region passes along the inner boundary of the canal. In those cases where extremely good sealing between the edge region 64 and the sealing strips is aimed at packings 65a, 65b of sealing material are provided adjoining the latter, which are in contact with the edge region 64 of the plate when the same passes between the sealing strips.

Upstream and downstream of the filter element 20 brackets 15a, 15b are arranged, each of which being provided with a bearing 16a, 16b for the centre axis 24 of the filter element. A locking means 17a, 17b ensures that the centre axis, and with it the filter element, is held in a correct position on rotation of the filter element. In certain applications the filter element is pivotly journalled on the axis 24 whereas in other applications the filter element is rigidly connected to the axis 24 which in turn is movable in bearings 16a, 16b of the brackets. The latter embodiment is used at least when the centre axis constitutes the driving axle for the rotation of the filter element.

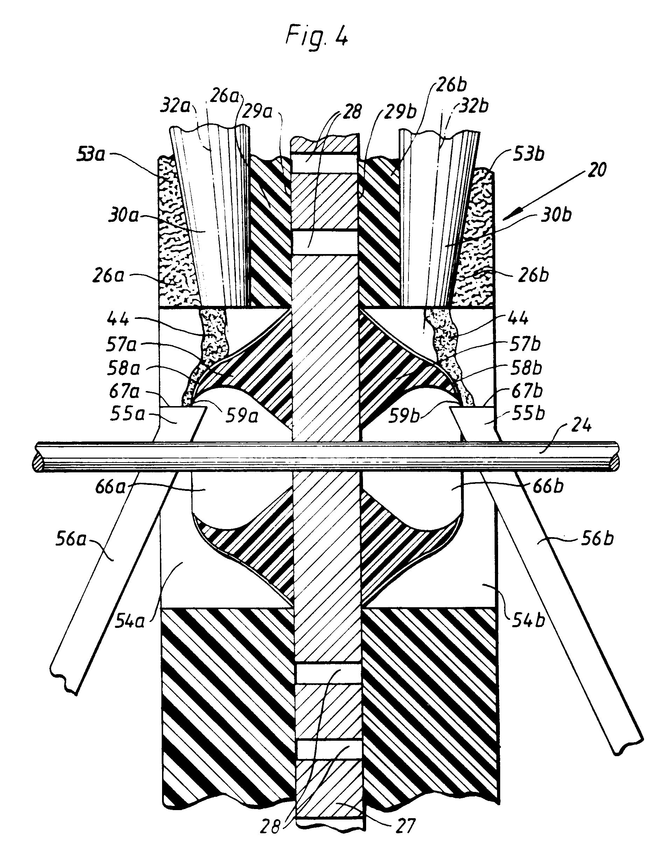

Fig 2 shows an embodiment where the canal is supported by a base plate 61. The canal also rests against supporting plates 62. Separated material 44 is supplied via the ducts 56a, 56b (see also Fig 4) to a tank 60.

Fig 4 shows in detail the design of the centre region of the filter element and how in the same the collecting means 55a, 55b for separated material are connected with ducts 56a, 56b leading to the tank 60 for separated material. In the central region, below the pressure rollers 30a, 30b, and as a rule directly below these on each side of the plate 27, draining and conducting means 57a, 57b are provided which in the embodiment shown terminate in a circumferential drip edge 59a, 59b. The draining and conducting means as a rule connect to opposite sides 29a, 29b of the plate and have a central void 66a, 66b which is enclosed by the drip edge, and through which passes the centre axis 24. At the side of the centre axis 24 the collecting means 55a, 55b partly project into the respective void and they too are enclosed by the drip edge 59a, 59b. In the outer boundary surface of the draining and conducting means grooves 58a, 58b are provided which extend from the opposite sides 29a, 29b of the plate to the drip edge 59a, 59b. In certain embodiments, however, draining and conducting means 57a, 57b are missing. The collecting means 55a, 55b are then provided with their openings 67a, 67b mainly below the bottom end of the pressure rollers 30a, 30b. The openings as a rule are situated directly below the pressure rollers 30a, 30b and as a rule connect mainly to the plate 27. The openings of the parts facing away from the plate usually are situated farther away from the plate than the boundary surfaces 22a, 22b of the filter element.

On using a filter arrangement in accordance with the invention, e g in a plant for the purification of process water or sewage, the contaminated liquid 40a in the embodiment shown in Fig 1-4 is supplied to the canal 10 and thereafter passes through the filter element 20. In the course of this the liquid passes through the filter material 26a of the filter element situated upstream, the passages 28 of the plate 27 and through the filter material 26b situated downstream, if present, whereafter the liquid continues through the canal downstream of the filter element 20. Owing to the obstacle which the filter element and bodies already accumulated, if any, constitute for the passage of the liquid, a level difference is created between the liquid surface 41a upstream of the filter element and the liquid surface 41b downstream of the same. As the liquid passes through the filter material substances accompanying the liquid stick to the counterflow-facing of the filter material and accumulate in the pores of the filter material. In embodiments where the filter element is rotated intermittently the accumulation of substances gradually will become so great that the combined counterflow area of the filter element becomes insufficient and the liquid surface upstream of the filter element commences to rise. When this occurs the filter element is rotated a distance so that filter material wherein contaminations have accumulated will be lifted up out of the liquid, at the same time as filter material with a better flow-through capacity is passed down into the liquid.

As the filter element is rotated, filter material 26a and 26b respectively passes under compression the gap between the pressure rollers 30a, 30b, see also Fig 4. In so doing liquid present in the cavities of the filter material is squeezed out, at the same time as substances which got stuck in the pores of the filter material are forced out of the filter material by the liquid. Such substances or such material 44 separated flow or fall down towards the outer boundary surface of the draining and conducting means 57a, 57b and are carried in the grooves 58a, 58b to the drip edges 59a, 59b, to fall down to the collecting means 55a, 55b and be removed via the ducts 56a, 56b to the tank 60 for separated material. In embodiments where the draining and conducting means 57a, 57b are absent, the contaminations, together with squeezed out liquid, fall down directly into the collecting means 55a, 55b. Owing to the liquid being squeezed out of the filter material under pressure the material which got stuck in the pores of the filter material is subjected to a corresponding pressure and is squeezed out of the filter material. The filter material cleaned in this manner is suitable thereafter to be passed down once again into the liquid flow in order to intercept substances accompanying the same.

It has been stated above that the filter element is rotated intermittently, but it will be obvious to those versed in the art that in certain applications a continuous rotation is preferable. This is especially the case when strongly contaminated liquid is to be purified. The invention reveals a very simple technique for intermittent rotation as well as for a controlled transition between intermittent and continuous rotation of the filter element. In accordance with this technique the level difference between the liquid surface 41a upstream and the liquid level 41b downstream of the filter element is measured.

When the level difference exceeds a predetermined value, rotation of the filter element is started, and when the level difference has fallen below a certain value, rotation is interrupted. In certain applications the speed of rotation is adapted according to the level difference, so that as the level difference increases, the speed of rotation too is increased, and as the level difference diminishes, the speed of rotation is lowered. A time control is supplied as a rule where the liquid flow and/or the degree of contamination are such that parts of the filter remain outside the liquid flow for a time so long that otherwise there might be a risk of drying out of the filter material.

Within the concept of the invention a great number of embodiments are included. Thus in certain embodiments the filter element is rotated by pressure rollers 30a, 30b, which for this purpose are connected to driving means (not shown in the figures).

In some embodiments the mainly mechanically stable plate 27 is absent whilst in other embodiments the plate is provided with filter material only on its one side.

In certain applications of the invention a number of filter elements are provided behind one another in the direction of flow of the liquid so as to improve successively the purity of the liquid. In a preferred embodiment the filter elements are provided on a common centre axis. In certain applications the filter elements are coupled in parallel so as to increase the capacity (flow area), whilst in other applications they are coupled in series so as to increase the degree of purification. In the latter case the filter material as a rule will have an ever diminishing pore size the farther downstream the filter is situated.

It also will be obvious to those versed in the art that the concept of the invention is not limited to embodiments incorporating one or more rotating filter elements as described above. Corresponding technical effects are achieved e g with a filter element which is moved across the canal 10 and where the filter material is compressed after it has passed through an opening in the canal wall. In such an application, for example, two regions of the filter element alternate between positions in the liquid flow and positions outside the same.

## Claims

1. A filter arrangement for the separation of solid bodies, semisolid bodies, and/or viscous substances (42) from a liquid (40) forming a liquid flow (43) through a canal (10), said filter arrangement comprising a filter element (20) provided in the canal through which the liquid (40) passes for the separation of said bodies and/or substances, the filter element (20) comprising a flexible, resilient, porous filter material (26) provided with numerous passages, the filter element being adapted so as to move the filter material between a position wherein the liquid (40) passes through the filter material and a position wherein the filter material is situated outside the liquid flow (43) and a pressure means being provided in order to compress filter material when situated outside the liquid flow, **characterized** in that the filter element (20) connects mainly sealingly to the inner boundary of the canal (10), that the filter element (20) forms a disc comprising the filter material (26), that the disc is rotatable about a centre axis (24), that the disc has a circular outer edge boundary (21), and that the pressure means is disposed as a truncated cone with its smallest circumference closest to the centre of the filter.

2. A filter arrangement in accordance with claim 1, **characterized** in that pressure means (30a,30b) are provided at opposite boundary surfaces (22a,22b) of the filter element (20).

3. A filter arrangement in accordance with anyone of claims 1-2, **characterized** in that the filter material (26a,26b) is fixed to a mainly mechanically stable means (27).

4. A filter arrangement as claimed in claim 3, **characterized** in that the mechanically stable means (27) is provided with passages (28) for the liquid flow (40).

5. A filter arrangement in accordance with claim 2 or 3, **characterized** in that the filter material (26a,26b) is attached to at least one of the opposite sides of the mechanically stable means (27).

6. A filter arrangement in accordance with anyone of claims 1-5, **characterized** in that the outer edge boundary (21) is provided with means (50) which cooperate with driving means for the rotation of the filter element (20) about its centre axis (24).

7. A filter arrangement in accordance with anyone of claims 1-6, **characterized** in that the pressure means (30a,30b) comprise pressure rollers (30a,30b), each oriented with its longitudinal axis (32a,32b) mainly directed towards the centre axis (24) of the disc (20).

8. A filter arrangement in accordance with anyone of claims 1-7, **characterized** in that collecting means (55a,55b) being connectable to a tank (60) are provided in a region below the pressure rollers (30a,30b) for the collection of down-falling bodies or substances freed and/or liquid freed on compression of the filter material.

9. A filter arrangement in accordance with claim 8, **characterized** in that a draining and conducting means (57a,57b) is arranged in the centre region of the filter element (20), that the draining and conducting means forms a central void (66a,66b) wherein the collecting means partially projects in order that down-falling bodies or substances freed and/or liquid freed on compression of the filter material shall be guided via the draining and conducting means to the collecting means (55a,55b).

## Patentansprüche

1. Filteranordnung zum Trennen von festen Körpern, halbfesten Körpern und/oder viskosen Substanzen (42) von einer Flüssigkeit (40), die eine Flüssigkeitsströmung (43) durch einen Kanal (10) bildet, wobei die Filteranordnung ein Filterelement (20) aufweist, das im Kanal, durch das die Flüssigkeit (40) hindurchläuft, zum Trennen der Körper und/oder Substanzen vorgesehen ist, wobei das Filterelement (20) ein flexibles, elastisches, poröses Filtermaterial (26) ist, das mit zahlreichen Durchlässen versehen ist, und das Filterelement so ausgebildet ist, daß es das Filtermaterial zwischen einer Stellung, in der die Flüssigkeit (40) durch das Filtermaterial hindurchläuft, und einer Stellung bewegt, in der das Filtermaterial außerhalb der Flüssigkeitsströmung (43) angeordnet ist, und ein Druckmittel aufweist, das vorgesehen ist, um das Filtermaterial zusammenzudrücken, wenn es sich außerhalb der Flüssigkeitsströmung befindet, dadurch gekennzeichnet, daß das Filterelement (20) in der Hauptsache dichtend mit der inneren Grenzfläche des Kanals (10) verbunden ist, daß das Filterelement (20) eine Scheibe bildet, die das Filtermaterial (26) aufweist, daß die Scheibe drehbar um eine Mittelachse (24) ist, daß die Scheibe eine kreisförmige äußere Randbegrenzung (21) aufweist, und daß das Druckmittel als ein Kegelstumpf angeordnet ist, dessen kleinster Umfang dem Zentrum des Filters am nächsten ist.

2. Filteranordnung nach Anspruch 1, dadurch gekennzeichnet, daß Druckmittel (30a, 30b) an gegenüberliegenden Grenzoberflächen (22a, 22b) des Filterelementes (20) vorgesehen sind.

3. Filteranordnung nach einem der Ansprüche 1 bis 2, dadurch gekennzeichnet, daß das Filtermaterial (26a, 26b) an einem in der Hauptsache mechanisch stabilen Mittel (27) befestigt ist.

4. Filteranordnung nach Anspruch 3, dadurch gekennzeichnet, daß das mechanisch stabile Mittel (27) mit Durchlässen (28) für die Flüssigkeitsströmung (40) versehen ist.

5. Filteranordnung nach Anspruch 2 oder 3, dadurch gekennzeichnet, daß das Filtermaterial (26a, 26b) an wenigstens einer der gegenüberliegenden Seiten des mechanisch stabilen Mittels (27) angebracht ist.

6. Filteranordnung nach einem der Ansprüche 1 bis 5, dadurch gekennzeichnet, daß die äußere Randbegrenzung (21) mit Mitteln (50) versehen ist, die mit Antriebsmitteln für die Drehung des Filterelements (20) um seine Mittelachse (24) zusammenwirken.

7. Filteranordnung nach einem der Ansprüche 1 bis 6, dadurch gekennzeichnet, daß das Druckmittel (30a, 30b) Druckrollen (30a, 30b) aufweist, die jeweils mit ihrer Längsachse (32a, 32b) in der Hauptsache zur Mittelachse (24) der Scheibe (20) gerichtet sind.

8. Filteranordnung nach einem der Ansprüche 1 bis 7, dadurch gekennzeichnet, daß Sammelmittel (55a, 55b), die mit einem Tank (60) verbindbar sind, in einem Bereich unterhalb der Druckrollen (30a, 30b) zum Sammeln von herunterfallenden Körpern oder Substanzen, die freigesetzt werden, und/oder von Flüssigkeit vorgesehen sind, die beim Zusammendrücken des Filtermaterials freigesetzt wird.

9. Filteranordnung nach Anspruch 8, dadurch gekennzeichnet, daß ein Abfluß- und Leitmittel (57a, 57b) im Mittelbereich des Filterelementes (20) angeordnet ist, daß das Abfluß- und Leitmittel eine zentrale Lücke (66a, 66b) bildet, in die das Sammelmittel teilweise hineinragt, damit herunterfallende freigesetzte Körper oder Substanzen und/oder beim Zusammendrücken des Filtermaterials freigesetzte Flüssigkeit über das Abfluß- und Leitmittel zu dem Sammelmittel (55a, 55b) geführt werden sollen.

## Revendications

1. Agencement de filtre pour la séparation de corps solides, de corps semi-solides et/ou de substances visqueuses (42) d'un liquide (40) formant un flux de liquide (43) dans un canal (10), ledit agencement de filtre comprenant un élément filtre (20) situé dans le canal par lequel le liquide (40) passe pour la séparation desdits corps et/ou substances, l'élément filtre (20) comprenant un matériau filtre poreux, élastique, flexible (26) doté de nombreux passages, l'élément filtre étant adapté à déplacer le matériau filtre entre une position dans laquelle le liquide (40) traverse le matériau filtre et une position dans laquelle le matériau filtre est situé à l'extérieur du flux de liquide (43) et des moyens de pression étant prévus pour comprimer le matériau filtre lorsqu'il est situé à l'extérieur du flux de liquide, caractérisé en ce que l'élément filtre (20) se raccorde de manière essentiellement étanche à la limite interne du canal (10), en ce que l'élément filtre (20) forme un disque comprenant le matériau filtre (26), en ce que le disque peut tourner autour d'un axe central (24), en ce que le disque comporte une limite de bord externe circulaire (21), et en ce que le moyen de pression est disposé en un cône tronqué avec sa plus petite circonférence la plus proche du centre du filtre.

2. Agencement de filtre selon la revendication 1, caractérisé en ce que les moyens de pression (30a, 30b) sont positionnés aux surfaces limites opposées (22a, 22b) de l'élément filtre (20).

3. Agencement de filtre selon l'une quelconque des revendications 1 à 2, caractérisé en ce que le matériau filtre (26a, 26b) est fixé à un moyen (27) essentiellement stable mécaniquement.

4. Agencement de filtre selon la revendication 3, caractérisé en ce que le moyen stable mécaniquement (27) est doté de passages (28) pour le flux de liquide (40).

5. Agencement de filtre selon la revendication 2 ou 3, caractérisé en ce que le matériau filtre (26a, 26b) est fixé à au moins une des faces opposées du moyen stable mécaniquement (27).

6. Agencement de filtre selon l'une quelconque des revendications 1 à 5, caractérisé en ce que la limite de bord externe (21) est dotée d'un moyen (50) qui coopère avec un moyen d'entraînement pour la rotation de l'élément filtre (20) autour de son axe central (24).

7. Agencement de filtre selon l'une quelconque des revendications 1 à 6, caractérisé en ce que les moyens de pression (30a, 30b) comprennent des rouleaux de pression (30a, 30b), chacun orienté avec son axe longitudinal (32a, 32b) dirigé principalement vers l'axe central (24) du disque (20).

8. Agencement de filtre selon l'une quelconque des revendications 1 à 7, caractérisé en ce que des moyens collecteurs (55a, 55b) pouvant être reliés à une cuve (60) sont disposés dans une zone sous les rouleaux de pression (30a, 30b) pour recueillir les corps ou substances libérés qui tombent et/ou le liquide libéré lors de la compression du matériau filtre.

9. Agencement de filtre selon la revendication 8, caractérisé en ce que des moyens d'écoulement et de guidage (57a, 57b) sont disposés dans la zone centrale de l'élément filtre (20), en ce que les moyens d'écoulement et de guidage forment un vide central (66a, 66b) dans lequel les moyens collecteurs se projettent partiellement afin que les corps ou substances libérés qui tombent et/ou le liquide libéré lors de la compression du matériau filtre soient guidés via les moyens d'écoulement et de guidage jusqu'aux moyens collecteurs (55a, 55b).
